# EUROPEAN PATENT APPLICATION

(11) **EP 2 447 014 A2**
(43) Date of publication of application: **02.05.2012**
(21) Application number: 11183211.9
(22) Date of filing: 29.09.2011
(51) Int. Cl.: B25J 9/16

(54) **Method and system for enhancing operating performance of an autonomic mobile robotic device**

(30) Priority: 26.10.2010 US 911872
(71) Applicant: Deere & Company, Moline, IL 61265-8098 (US)
(72) Inventor: Anderson, Noel W, Fargo, ND North Dakota 58102 (US); Bodwell, Mark, Cary, NC North Carolina 27513 (US); Foessel, Alex, Sherrard, IL Illinois 61281 (US); Hein, Thomas K., Moline, IL Illinois 61265 (US)
(74) Representative: Holst, Sönke

(57) **Abstract**

A mechanism for optimizing behavior of an autonomous mobile robotic device. A first set of robotic behaviors is created based on a set of work area parameters and a behavior selection. The autonomous mobile robotic device is controlled using the first set of robotic behaviors. Performance data indicative of a performance of the autonomous mobile robotic device when controlled by the first set of robotic behaviors is collected. The performance data is analyzed to create a second set of robotic behaviors having enhanced performance relative to the first set of robotic behaviors. The first set of robotic behaviors is replaced with the second set of robotic behaviors to control the autonomous mobile robotic device using the second set of robotic behaviors.

## Description

### Field of the Invention

The present invention relates generally to an autonomic mobile robotic device, and in particular, is directed to a method and system for enhancing the operating performance of such robotic device using captured performance data of such robotic device.

### Background of the Invention

Service robotic devices, such as robotic mowers, are typically price constrained and have limited computational/reasoning capability and associated memory. The ability for such service robotic devices to adapt its mode of operation in different environments having numerous and widely varying parameters can thus be challenging due to such resource constraints that limit the internal processing capabilities of such service robotic devices.

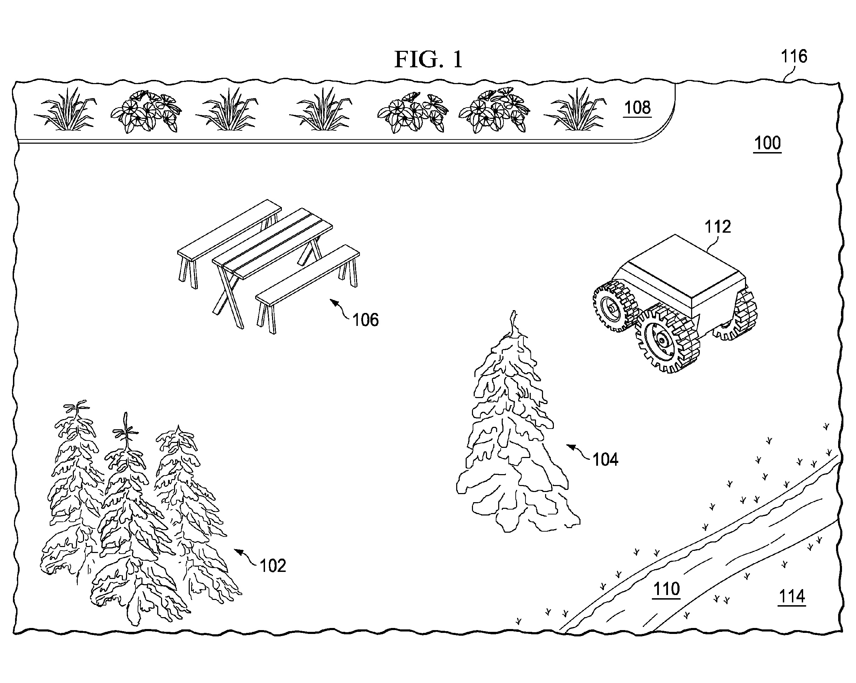

Referring first to Figure 1, there is shown at 100 a typical work area 100. Such work area could be, for example, the back yard of a home. In this particular work area 100, there is depicted a clump of trees 102, a single tree 104, a picnic table 106, a flower garden 108 and a small creek 110. Also shown within work area 100 is an autonomous mobile robotic device 112, which in this particular example is a robotic mower for mowing grass within work area 100. The primary objective of robotic device 112 within work area 100 is to perform a task while avoiding all or substantial contact (light, minimal, partial or brief contact may be acceptable in some circumstances) with obstacles such as trees 102 and 104, picnic table 106, flower garden 108 and creek 110. Another objective of robotic device 112 is to avoid travel within keep-out area 114 of work area 100, since the robotic device 112 is unable to traverse across the creek 110 to gain access to this keep-out area 114. Another example of keep-out area 114 would be a dog pen or kennel (not shown) within this work area 100. Of course, this is but one example of a work area for which tasks are to be performed therein by a robotic device. Another work area could be, for example, the inside of a house where the robotic device is a vacuum and furniture within such house would be obstacles to be avoided by the vacuum robotic device.

In some exemplary cases, avoidance includes preventing contact with an object or area. In other exemplary cases, contact may be permitted, but only briefly until robotic device 112 can move away from the object.

Due to the particular illustrative application for this robotic device being a consumer mower that is a mass produced consumer product, this particular robotic device has relatively limited computational/reasoning capability and associated memory when compared to other types of industrial-strength robotic devices. As such, there are limitations as to how 'smart' or 'adaptable' this robotic device 112 is when performing a task in the work area 100. For example, instead of being programmed to follow a detailed path when mowing the yard using a back and forth linear path, this particular robotic device 112 is programmed to linearly travel in a random direction until it encounters an obstacle, at which point it randomly selects another direction for linear travel until it encounters another obstacle, at which point it again randomly selects another direction for linear travel. Over time, after repeatedly changing its direction of travel, the yard will be mowed as the random selection of travel direction will eventually cover the entire, or a substantial portion, of the yard after enough time has passed.

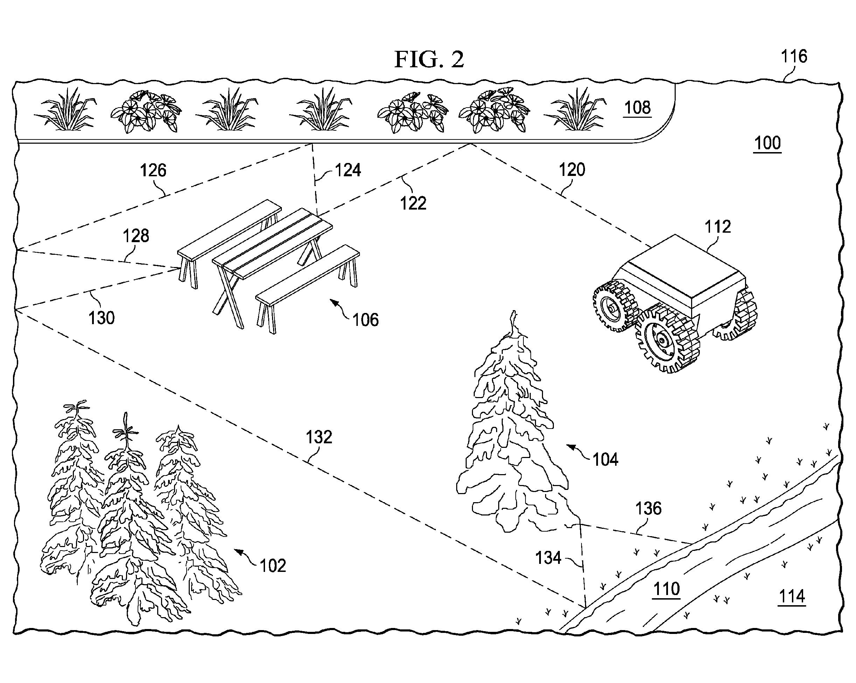

A portion of such travel with random direction selection is shown in Figure 2, where robotic device 112 initially travels along path 120 until encountering/approaching flower bed 108, at which point it randomly selects another direction of travel. The robotic device 112 follows path 122 until encountering/approaching picnic table 106, at which point it randomly selects another direction of travel. The robotic device 112 follows path 124 until encountering/approaching flower bed 108, at which point it randomly selects another direction of travel. The robotic device 112 follows path 126 until encountering/approaching outer peripheral boundary 116, at which point it randomly selects another direction of travel. Peripheral boundary 116 may be, for example and without limitation, a wire emitting an electromagnetic signal. The robotic device 112 follows path 128 until encountering/approaching picnic table 106, at which point it randomly selects another direction of travel. The robotic device 112 follows path 130 until encountering/approaching outer peripheral boundary 116, at which point it randomly selects another direction of travel. The robotic device 112 follows path 132 until encountering/approaching creek 110, at which point it randomly selects another direction of travel. The robotic device 112 follows path 134 until encountering/approaching tree 104, at which point it randomly selects another direction of travel. The robotic device 112 follows path 136 until encountering/approaching creek 110, at which point it randomly selects another direction of travel in similar fashion to that described above. Over time, and with enough selection of random direction of travel, most if not all of the work area 100 will be traversed by the travel paths taken by robotic device 112.

Because robotic device 112 is a consumer-oriented device that is mass produced, such robotic device cannot be programmed to account for particular characteristics of a given work area that it will be used in. For example, most yards have their own unique characteristics, and it is rare to encounter two yards that are laid out in an exact fashion with the identical obstacles. Furthermore, the location of objects and boundaries in another exemplary work area may cause robotic device 112 to become trapped and spend an excessive amount of time and effort in one area of the work area relative to other areas of the work area. If the robotic device 112 is trapped, it may be unable to return to the charging station before running out of energy, which is an inconvenience to an owner/operator of the work area.

What is needed is an ability to augment such local resource constraints of an autonomous mobile robotic device.

### Summary

An embodiment of the present invention provides a feedback mechanism from a physical or simulated robotic device to a remote data analysis system, where a current robotic behavior or set of robotic behaviors that is programmed within the service robotic device is updated based on actual performance of the service robotic device relative to predicted performance of the service robotic device.

One embodiment provides a method for optimizing behavior of an autonomous mobile robotic device using a set of work area parameters. A first set of robotic behaviors is created based on the set of work area parameters and a behavior selection. The autonomous mobile robotic device is controlled using the first set of robotic behaviors.

Performance data indicative of a performance of the autonomous mobile robotic device when controlled by the first set of robotic behaviors is collected. The performance data is analyzed to create a second set of robotic behaviors having enhanced performance relative to the first set of robotic behaviors. The first set of robotic behaviors is replaced with the second set of robotic behaviors to control the autonomous mobile robotic device using the second set of robotic behaviors.

In an alternative embodiment, instead of using actual performance data generated at a jobsite, the performance data is generated using a simulation(s) of an autonomous mobile robotic device operating at a jobsite.

Thus, there is provided an ability to augment local resource constraints of an autonomous mobile robotic device to improve such robotic device against various metrics including, for example and without limitation, the time required to substantially cover an area, the probability of becoming trapped in a portion of a work area, and a new area covered on a single battery charge.

The features, functions, and advantages can be achieved independently in various embodiments of the present invention or may be combined in yet other embodiments in which further details can be seen with reference to the following description and drawings.

### Brief Description of the Drawings

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present invention when read in conjunction with the accompanying drawings, wherein:
Figure 1 is a depiction of a generalized work area in accordance with an illustrative embodiment;
Figure 2 is a depiction of a generalized work area with random robotic device movement in accordance with an illustrative embodiment;
Figure 3 is a block diagram of components used to control a robotic device in accordance with an illustrative embodiment;
Figure 4 is a block diagram of a data processing system in accordance with an illustrative embodiment;
Figure 5 is a block diagram of functional software components that may be implemented in a machine controller in accordance with an illustrative embodiment;
Figure 6 is a flow diagram of a process to update behaviors in a robotic device in accordance with an illustrative embodiment; and
Figure 7 is a flow diagram of a process to analyze performance data with respect to a particular behavior(s).

An embodiment of the present invention provides a feedback mechanism from a physical or simulated robotic device to a remote data analysis system, where current robotic behavior that is programmed within the service robotic device is updated based on actual performance of the service robotic device relative to predicted performance of the service robotic device. For example, performance data may indicate a particular troublesome location that the robotic device has trouble maneuvering around, such as a picnic table, storage shed, flower bed, swing-set, patio furniture or outdoor barbeque grill. This data could indicate that the robotic device spends an excessive amount of time at such obstacle, indicating that the robotic device has been stuck or otherwise prevented from travelling along a given (random) path.

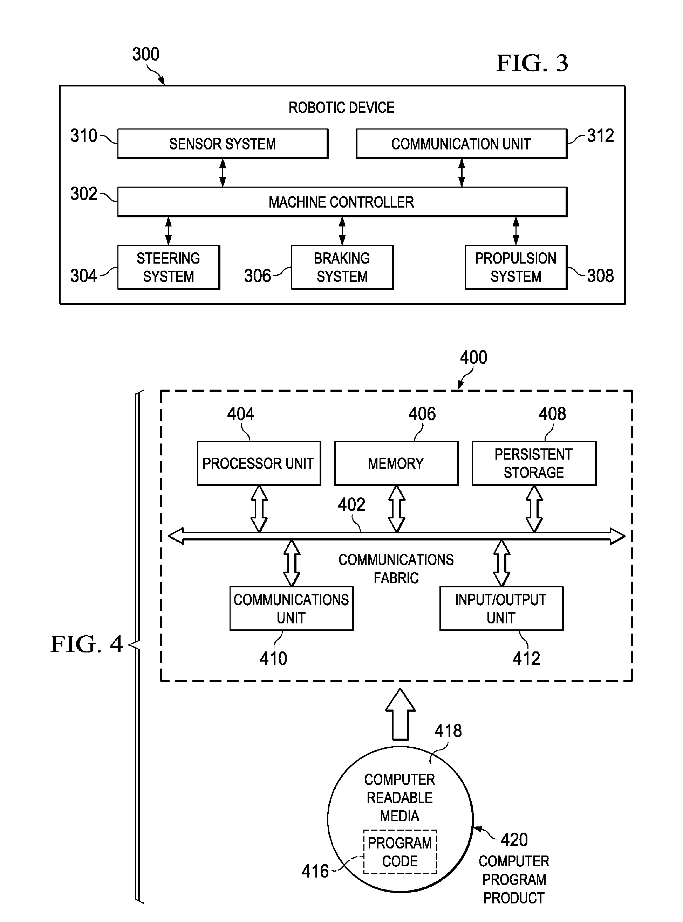

With reference now to Figure 3, a block diagram of components used to control a robotic device is depicted in accordance with an illustrative embodiment. In this example, robotic device 300 is an example of an autonomous mobile robotic device, such as robotic device 112 in Figure 1. In this example, robotic device 300 includes machine controller 302, steering system 304, braking system 306, propulsion system 308, sensor system 310, and communication unit 312. Machine controller 302 may be, for example, a data processing system or some other device that may execute processes to control movement of a robotic device. Machine controller 302 may be, for example, a computer, an application integrated specific circuit, or some other suitable device. Machine controller 302 may execute processes to control steering system 304, braking system 306, and propulsion system 308 to control movement of the robotic device. Machine controller 302 may send various commands to these components to operate the robotic device in different modes of operation. These commands may take various forms depending on the implementation. For example, the commands may be analog electrical signals in which a voltage and/or current change is used to control these systems. In other implementations, the commands may take the form of data sent to the systems to initiate the desired actions. Steering system 304 may control the direction or steering of the robotic device in response to commands received from machine controller 302. Steering system 304 may be, for example, an electrically controlled hydraulic steering system, or some other suitable steering system. Braking system 306 may slow down and/or stop the robotic device in response to commands from machine controller 302. Braking system 306 may be an electrically controlled braking system. This braking system may be, for example, a hydraulic braking system, a friction braking system, or some other suitable braking system that may be electrically controlled. In these examples, propulsion system 308 may propel or move the robotic device in response to commands from machine controller 302. Propulsion system 308 may maintain or increase the speed at which a robotic device moves in response to instructions received from machine controller 302.

Propulsion system 308 may be an electrically controlled propulsion system. Propulsion system 308 may be, for example, an internal combustion engine, an internal combustion engine/electric hybrid system, an electric engine, or some other suitable propulsion system. Sensor system 310 may be a set of sensors used to collect information about the environment around robotic device 300. This information collected by sensor system 310 may be used for localization in identifying a location of robotic device 300, a location of another robotic device, an obstacle, or a barrier in the environment. In these examples, the information is sent to machine controller 302 to provide data in identifying how the robotic device should move in different modes of operation. For example, braking system 306 may slow robotic device 300 in response to a limited detection range of sensor system 310 on robotic device 300. In these examples, a set refers to one or more items. A set of sensors is one or more sensors in these examples. Communication unit 312 may provide communications links to machine controller 302 to receive information. This information includes, for example, data, commands, and/or instructions. Communication unit 312 may take various forms. For example, communication unit 312 may include a wireless communications system, such as a cellular phone system, a Wi-Fi wireless system, a Bluetooth wireless system, or some other suitable wireless communications system. Further, communication unit 312 also may include a communications port, such as, for example, a universal serial bus port, a serial interface, a parallel port interface, a network interface, or some other suitable port to provide a physical communications link. Communication unit 312 may be used to communicate with a remote location or an operator. Communications unit 312 may include a battery back-up on a plurality of electronic modules that each operates at a different frequency in order to minimize the likelihood of common mode failure.

With reference now to Figure 4, a block diagram of a data processing system is depicted in accordance with an illustrative embodiment. Data processing system 400 is an example of one manner in which machine controller 302 in Figure 3 may be implemented. In this illustrative example, data processing system 400 includes communications fabric 402, which provide communication between processor unit 404, memory 406, persistent storage 408, communications unit 410, and input/output (I/O) unit 412.

Processor unit 404 serves to execute instructions for software that may be loaded into memory 406. Processor unit 404 may be a set of one or more processors or may be a multiprocessor core, depending on the particular implementation. Further, processor unit 404 may be implemented using one or more heterogeneous processor systems in which a main processor is present with secondary processors on a single chip. As another illustrative example, processor unit 404 may be a symmetric multiprocessor system containing multiple processors of the same type. Memory 406 and persistent storage 408 are examples of storage devices. A storage device is any piece of hardware that is capable of storing information either on a temporary basis and/or a permanent basis. Memory 406, in these examples, may be, for example, a random access memory or any other suitable volatile or non-volatile storage device. Persistent storage 408 may take various forms depending on the particular implementation. For example, persistent storage 408 may contain one or more components or devices. For example, persistent storage 408 may be a hard drive, a flash memory, a rewritable optical disk, a rewritable magnetic tape, or some combination of the above.

The media used by persistent storage 408 also may be removable. For example, a removable hard drive may be used for persistent storage 408. Communications unit 410, in these examples, provides for communications with other data processing systems or devices. In these examples, communications unit 410 is a network interface card. Communications unit 410 may provide communications through the use of either or both physical and wireless communications links. Input/output unit 412 allows for input and output of data with other devices that may be connected to data processing system 400. For example, input/output unit 412 may provide a connection for user input through a keyboard and mouse. Instructions for the operating system and applications or programs are located on persistent storage 408. These instructions may be loaded into memory 406 for execution by processor unit 404. The processes of the different embodiments may be performed by processor unit 404 using computer implemented instructions, which may be located in a memory, such as memory 406.

These instructions are referred to as program code, computer usable program code, or computer readable program code that may be read and executed by a processor in processor unit 404. The program code in the different embodiments may be embodied on different physical or tangible computer readable media, such as memory 406 or persistent storage 408. Program code 416 is located in a functional form on computer readable media 418 that is selectively removable and may be loaded onto or transferred to data processing system 400 for execution by processor unit 404. Program code 416 and computer readable media 418 form computer program product 420 in these examples. In one example, computer readable media 418 may be in a tangible form, such as, for example, an optical or magnetic disc that is inserted or placed into a drive or other device that is part of persistent storage 408 for transfer onto a storage device, such as a hard drive that is part of persistent storage 408. In a tangible form, computer readable media 418 also may take the form of a persistent storage, such as a hard drive, a thumb drive, or a flash memory that is connected to data processing system 400.

The tangible form of computer readable media 418 is also referred to as computer recordable storage media. In some instances, computer readable media 418 may not be removable. Alternatively, program code 416 may be transferred to data processing system 400 from computer readable media 418 through a communications link to communications unit 410 and/or through a connection to input/output unit 412. The communications link and/or the connection may be physical or wireless in the illustrative examples. The computer readable media also may take the form of non-tangible media, such as communications links or wireless transmissions containing the program code.

The different components illustrated for data processing system 400 are not meant to provide architectural limitations to the manner in which different embodiments may be implemented. The different illustrative embodiments may be implemented in a data processing system 15 including components in addition to or in place of those illustrated for data processing system 400. Other components shown in Figure 4 can be varied from the illustrative examples shown. As one example, a storage device in data processing system 400 is any hardware apparatus that may store data. Memory 406, persistent storage 408, and computer readable media 418 are examples of storage devices in a tangible form.

In another example, a bus system may be used to implement communications fabric 402 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 406 or a cache, such as found in an interface and memory controller hub that may be present in communications fabric 402.

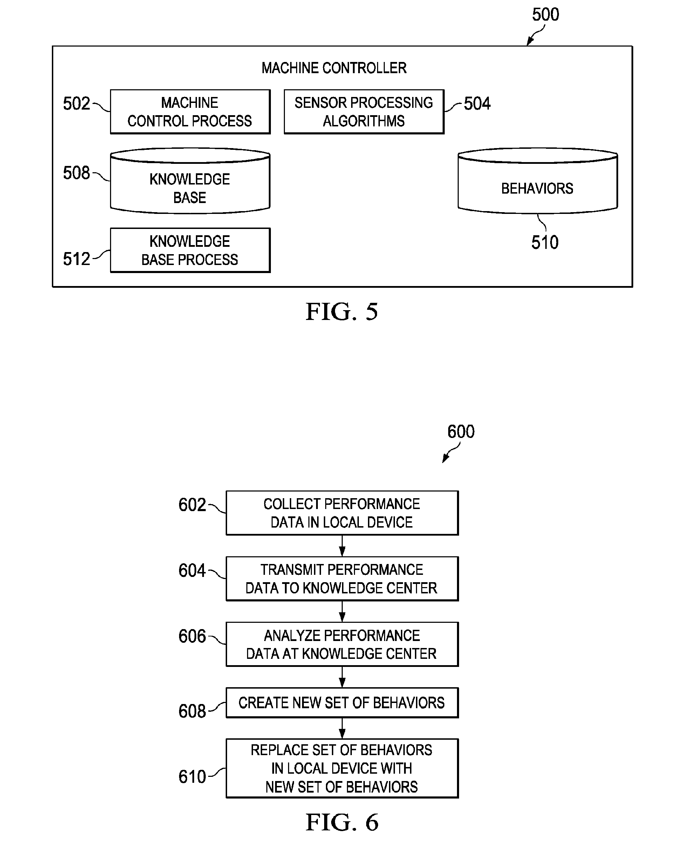

With reference now to Figure 5, a block diagram of functional software components that may be implemented in a machine controller is depicted in accordance with an illustrative embodiment. In this example, different functional software components that may be used to control a robotic device are illustrated. The robotic device may be an autonomous mobile robotic device, such as robotic device 112 in Figure 1.

Machine controller 500 may be implemented in a robotic device, such as robotic device 112 using a data processing system, such as data processing system 400 in Figure 4. In this example, machine control process 502, sensor processing algorithms 504, knowledge base 508, behaviors 510, and knowledge base process 512 are present in machine controller 500. Machine control process 502 transmits signals to steering, braking, and propulsion systems, such as steering system 304, braking system 306, and propulsion system 308 in Figure 3. Machine control process 502 may also transmit signals to components of a sensor system, such as sensor system 310 in Figure 3. For example, in an illustrative embodiment, machine control process 502 may transmit signals to sensors within sensor system 310 in order to activate, deactivate, or manipulate the sensor itself. Sensor processing algorithms 504 receives sensor data from sensor system 310 and classifies the sensor data into thematic features. This classification may include identifying objects that have been detected in the environment. For example, sensor processing algorithms 504 may classify an object as a person, telephone pole, tree, road, light pole, driveway, fence, or some other type of object. The classification may be performed to provide information about objects in the environment. This information may be used to generate a thematic map, which may contain a spatial pattern of attributes. The attributes may include classified objects. The classified objects may include dimensional information, such as, for example, location, height, width, color, and other suitable information. This map may be used to plan actions for the robotic device. The action may be, for example, performing object avoidance.

Sensor processing algorithms 504 interact with knowledge base 508 to locate the classified thematic features on a thematic map stored in knowledge base 508, and calculate the robotic device position based on the sensor data in conjunction with the landmark localization. Machine control process 502 receives the environmental data from sensor processing algorithms 504, and interacts with knowledge base 508 and behaviors 510 in order to determine which commands to send to the robotic device's steering, braking, and propulsion components.

Knowledge base 508 contains information about the operating environment, such as, for example, a fixed map showing streets, structures, tree locations, and other static object locations. Knowledge base 508 may also contain information, such as, without limitation, local flora and fauna of the operating environment, current weather for the operating environment, weather history for the operating environment, specific environmental features of the work area that affect the robotic device, and the like. Knowledge base 508 may also contain a set of work area parameters, such as a work area perimeter, work area topology, a keep-out region within the work area, and an identified object within the work area. The information in knowledge base 508 may be used to perform classification and plan actions. Knowledge base 508 is located within machine controller 500.

Behaviors 510 contains behavioral processes specific to machine coordination that can be called and executed by machine control process 502. The behaviors 510 are accessed by machine control process 502. Per the inventive features provided herein, the behaviors 510 are updated with a new set of behaviors based on information collected and stored in the knowledge base 508, as further described below.

Knowledge base process 512 interacts with sensor processing algorithms 504 to receive processed sensor data about the environment, and in turn interacts with knowledge base 508 to classify objects detected in the processed sensor data. Knowledge base process 512 also informs machine control process 502 of the classified objects in the environment in order to facilitate accurate instructions for machine control process 502 to send to steering, braking, and propulsion systems. For example, in an illustrative embodiment, sensor processing algorithms 504 detect narrow, cylindrical objects along the side of the planned path. Knowledge base process 512 receives the processed data from sensor processing algorithms 504 and interacts with knowledge base 508 to classify the narrow, cylindrical objects as tree trunks. Knowledge base process 512 can then inform machine control process 502 of the location of the tree trunks in relation to the robotic device, as well as any further rules that may apply to tree trunks in association with the planned path.

Per the inventive features provided herein, information pertaining to performance history of the robotic device, including travel paths and encountered obstacles, are maintained in knowledge base 508 of Figure 5. This information is transferred to a machine knowledge center that is remotely located from the robotic device, where such performance history is compared with predicted performance data for the set of behaviors loaded in behavior memory. The predicted performance data is determined by running simulations against the set of performance data using a known simulation based learning technique such as that available from Cyberbotics Ltd. of Lausanne, Switzerland. For example, their Webots 6 simulation tool/application program offers a rapid prototyping environment that allows a user to create 3D virtual worlds with physics properties such as mass, joints, friction coefficients, etc. The user can add simple passive objects or active objects called mobile robots. These robots can have different locomotion schemes (wheeled robots, legged robots, or flying robots). Moreover, they may be equipped with a number of sensor and actuator devices, such as distance sensors, drive wheels, cameras, servos, touch sensors, emitters, receivers, etc. Finally, the user can program each robot individually to exhibit the desired behavior. Webots contains a large number of robot models and controller program examples to help users get started.

Webots also contains a number of interfaces to real mobile robots, so that once a simulated robot behaves as expected, one can transfer its control program to a real robot like e-puck, Khepera, Hemisson, LEGO Mindstorms, Aibo, etc. This capability is also described in a paper written by Michel, Olivier of Cyberbotics Ltd, entitled 'Webots™: Professional Mobile Robot Simulation', pp. 40-43, International Journal of Advanced Robotic Systems, Volume 1 Number 1 (2004), ISSN 1729-8806, and the 'Webots Reference Manual', release 6.3.0, Copyright© 2010 Cyberbotics Ltd., dated September 10, 2010, both of which are hereby incorporated by reference as background material. With regards to the present technique for enhancing the operating performance of a robotic device, such simulator is operable to model a work area, model robot sensors, model robot actuators, provide control algorithms to move a robot through a work area, and collect algorithm/robot performance data.

In another exemplary embodiment, genetic algorithms can be used to optimize the behaviors in the library for a given robotic device. These genetic algorithms may take many iterations to converge on an optimal solution, resulting in long execution times. A preferred embodiment uses rules based on previous experience - real or simulated - to develop statistical (fuzzy) rules to seed the initial library. Genetic algorithms or other optimization algorithms are then used to refine the set of behaviors to be used by the robotic device and to optimize parameters associated with such behaviors.

Turning now to Figure 6, there is shown at 600 a technique for improving performance of an autonomous mobile robotic device, such as robotic device 112 of Figure 1. Performance data is collected at the mobile device at 602. This performance data will typically span a large window of time, such as, days, weeks, or months where the performance data has been captured and locally stored within the robotic device. The performance data is a result of the robotic device operating in a particular one set of a plurality of behavior sets that have been selected to be used by the robotic device. For example, such behavior selection may be performed using techniques such as genetic algorithms, fuzzy rules, etc.

Alternatively, the performance data is generated using a simulated performance for a specified work area, using a tool such as Webots 6, available from Cyberbotics, Ltd of Lausanne, Switzerland, as previously described.

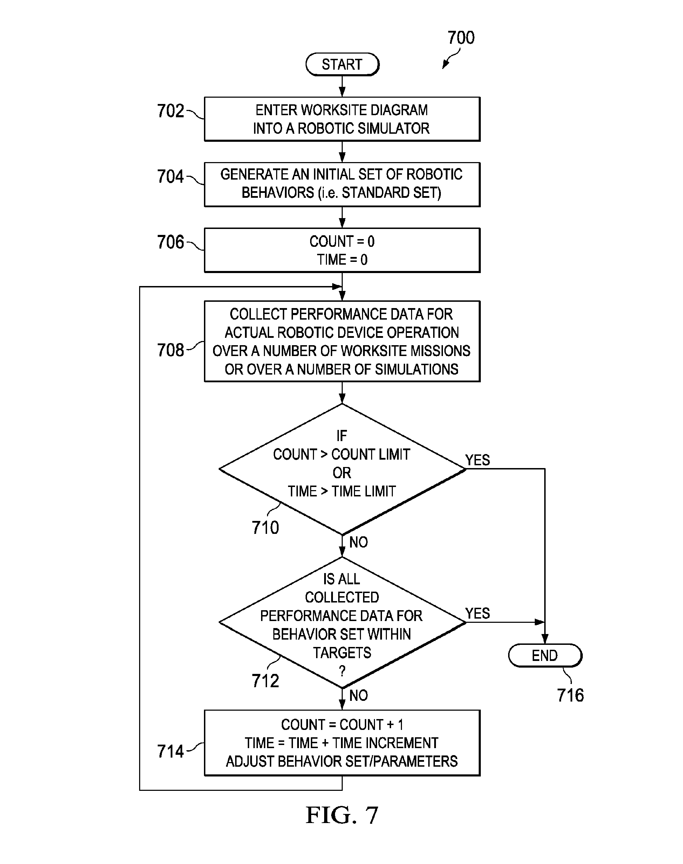

For the case where the performance data is actual field data, such performance data is transmitted or transferred to a knowledge center for processing at 604. For the case where the performance data is simulated performance data for a specified work area, this transmission step would not occur. At the knowledge center, the performance data (actual or simulated) is analyzed at 606, as will be further described below with respect to Figure 7. Such performance analysis includes at least one of (i) time to perform a task, (ii) likelihood of successfully completing the task, (iii) amount of energy used in completing the task, (iv) resulting benefit to the work area in completing the task, and (v) damage to the work area in completing the task.

The new set of second behaviors that were identified/created/generated at 608 as a part of the above described analysis are then used to replace the original, or first, set of behaviors with this newly identified/created/generated second set of behaviors at 610. The robotic device with an updated set of operating behaviors is now ready to operate with enhanced performance in performing tasks. While the particular task has been described as mowing grass, the present invention is not so limited, and may be applied to other types of autonomous mobile robotic devices that perform tasks such as area coverage, vacuuming, cleaning, material application and material collection.

Turning now to Figure 7, there is shown at 700 a technique for analyzing actual or simulated performance data. Processing begins at 702, where a diagram of the particular work area is entered into a robotic simulator. An initial set of robotic values, such as a standard set, is generated at 704. A count variable and time variable are then initialized at 706. At step 708, and for a given selected behavior, performance data is collected either (i) for an actual robotic device operation over a number of work area missions for the work area, or (ii) over a number of simulations. At decision block 710, it is determined if either the count variable has exceeded the count limit, or the time variable has exceeded the time limit. If either of these limits have been exceeded, the processing ends at 716. Otherwise, processing continues at decision block 712, where a determination is made as to whether all of the collected performance data for the selected behavior set is within predefined targets. If so, processing ends at 716. If not, processing continues at 714 where the count variable is incremented by one and the time variable is incremented by a time increment. The behavior set or behavior parameters are then adjusted using techniques such as genetic algorithms, fuzzy logic, etc. Processing then repeats at 708 to perform another performance data collection action in an attempt to converge on a set of acceptable performance data.

In a preferred embodiment, the diagram of the work area -which can be a human generated sketch of the work area, a human annotated aerial image of the work area, or a three-dimensional synthetic image of the work area - is analyzed in an automated fashion, as previously described with respect to element 702 of Figure 7. This automated analysis identifies various elements of the work area, using techniques further described in the incorporated by reference US patent application serial # 12/640,898 entitled "Automated Tagging for Landmark Identification", and includes analyzing items/elements such as the work area boundary, keep-out area(s) (such as buildings, flower beds, etc.), traversable areas with no action (such as a driveway), work-under areas (such as tables, swing set, trampolines, etc.), and a recharging station. The use of a hand-drawn sketch to control a robot is a known technique, as evidenced by the paper entitled "Using a hand-drawn sketch to control a team of robots" by Skubic, Marjorie, et al. (Auton Robot DOI 10.1007/s10514-007-9023-1), which is hereby incorporated by reference as background material.

Therefore, an embodiment of the present invention provides a feedback mechanism from a robotic device to a remote data analysis system, where a current robotic behavior that is programming within the service robotic device is updated based on actual performance of the service robotic device relative to predicted performance of the service robotic device. In an alternative embodiment, instead of using actual performance data generated at a jobsite, the performance data is generated using a simulation(s) of a robotic device operating at a jobsite.

The description of the different advantageous embodiments has been presented for purposes of illustration and description, and is not intended to be exhaustive or limited to the embodiments in the form disclosed. Many modifications and variations will be apparent to those of ordinary skill in the art. Further, different embodiments may provide different advantages as compared to other embodiments. The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. A method for optimizing behavior of an autonomous mobile robotic device, comprising:
creating a first set of robotic behaviors based on a set of work area parameters and a behavior selection;
controlling the autonomous mobile robotic device using the first set of robotic behaviors;
analyzing performance data indicative of a performance of the autonomous mobile robotic device when controlled by the first set of robotic behaviors to create a second set of robotic behaviors having enhanced performance relative to the first set of robotic behaviors; and
replacing the first set of robotic behaviors with the second set of robotic behaviors to control the autonomous mobile robotic device using the second set of robotic behaviors.

2. The method of claim 1, wherein the set of work area parameters comprises at least one of work area perimeter, work area topology, a keep-out region within the work area, and an identified object within the work area.

3. The method of claim 1, wherein the set of work area parameters comprises at least one of (i) results of an automated analysis of a human generated sketch of the work area, (ii) results of an automated analysis of a human annotated aerial image of the work area, and (iii) results of an automated analysis of a three-dimensional synthetic image of the work area.

4. The method of claim 1, wherein analyzing the performance data comprises at least one of (i) time to perform a task, (ii) likelihood of successfully completing the task, (iii) amount of energy used in completing the task, (iv) resulting benefit to the work area in completing the task, and (v) damage to the work area in completing the task.

5. The method of claim 4, wherein the task is one of area coverage, mowing, vacuuming, cleaning, material application and material collection.

6. The method of claim 1, wherein the performance data is field performance data received from the autonomous mobile robotic device that is indicative of the performance of the autonomous mobile robotic device at the work area when controlled by the first set of robotic behaviors.

7. The method of claim 6, wherein the first set of robotic behaviors is selected from a master set of preexisting behaviors using at least one of a genetic algorithm and fuzzy rules.

8. The method of claim 1, wherein the performance data is simulated performance generated by a simulation tool.

9. A system for optimizing behavior of an autonomous mobile robotic device, comprising:
a machine controller comprising a machine control process and a behavior library comprising behavioral processes that are operable to control a behavior of the autonomous mobile robotic device;
a simulator tool that generates an updated behavioral process based on performance data of the autonomous mobile robotic device and a set of work area parameters; and
an update mechanism to update the behavior library with the updated behavioral process.

10. The system of claim 9, wherein the set of work area parameters comprises at least one of work area perimeter, work area topology, a keep-out region within the work area, and an identified object within the work area.

11. The system of claim 9, wherein the set of work area parameters comprises at least one of (i) results of an automated analysis of a human generated sketch of the work area, (ii) results of an automated analysis of a human annotated aerial image of the work area, and (iii) results of an automated analysis of a three-dimensional synthetic image of the work area.

12. The system of claim 11, wherein the performance data is field performance data received from the autonomous mobile robotic device that is indicative of the performance of the autonomous mobile robotic device at a work area when controlled by a first set of robotic behaviors of the behavioral library.

13. The system of claim 12, wherein the first set of robotic behaviors is selected from a master set of preexisting behaviors using at least one of a genetic algorithm and fuzzy rules.

14. The system of claim 11, wherein the performance data is simulated performance generated by a simulation tool.

15. A computer program product having program code stored on a computer readable storage medium, where the program code is operable by a data processing system for optimizing behavior of an autonomous mobile robotic device by performing steps of:
creating a first set of robotic behaviors based on a set of work area parameters and a behavior selection;
controlling the autonomous mobile robotic device using the first set of robotic behaviors;
analyzing performance data indicative of a performance of the autonomous mobile robotic device when controlled by the first set of robotic behaviors to create a second set of robotic behaviors having enhanced performance relative to the first set of robotic behaviors; and
replacing the first set of robotic behaviors with the second set of robotic behaviors to control the autonomous mobile robotic device using the second set of robotic behaviors.
